# EUROPEAN PATENT APPLICATION

(11) **EP 4 231 099 A1**
(43) Date of publication of application: **23.08.2023**
(21) Application number: 21880259.3
(22) Date of filing: 24.03.2021
(51) Int. Cl.: G03H 1/04, G03H 1/26, C08J 3/075

(54) **HOLOGRAM COLOR DESIGNATION SYSTEM AND HOLOGRAM COLOR DESIGNATION METHOD BASED ON DITHERING MASK**

(30) Priority: 14.10.2020 KR 20200132828; 06.01.2021 KR 20210001680
(71) Applicant: Ulsan National Institute of Science and Technology (UNIST), Eonyang-eup Ulju-gun Ulsan 44919 (KR)
(72) Inventor: LEE, Jiseok, Ulju-gun Ulsan 44919 (KR); JEON, Inkyu, Ulju-gun Ulsan 44919 (KR); JEONG, Sanggyun, Ulju-gun Ulsan 44919 (KR)
(74) Representative: Hoffmann Eitle
(86) International application number: PCT/KR2021/003675
(87) International publication number: WO 2022/080607

(57) **Abstract**

The present disclosure relates to a system and method for designating, for a hologram, a color to be implemented, by forming a certain pattern on a dithering mask, such that a hologram structure may express a particular structural color. To this end, the present disclosure may include an image obtaining unit configured to obtain an original image; an encryption unit configured to convert original colors of respective pixels included in the original image into encrypted colors, according to a predefined standard; a pattern data generation unit configured to generate, based on the encrypted colors, pattern data including dithering patterns corresponding to the respective pixels; and a pattern forming unit configured to form, based on the pattern data, a mask pattern on a dithering mask.

## Description

### TECHNICAL FIELD

The present disclosure relates to a system and method for designating a hologram color by forming a certain pattern on a dithering mask such that a hologram structure may express a particular structural color.

### BACKGROUND ART

A hologram originally means a three-dimensional stereoscopic photograph made by using the principles of holography, and refers to a medium having recorded thereon optical interference fringes that reproduce a three-dimensional image.

However, with the recent development of technology, various holograms, such as holograms using the principles of conventional holography, holograms using diffraction grating structures, floating holograms using transparent films, or holograms synthesized with digital images, have been developed and used.

Meanwhile, the range of use of hologram is getting wider, and holograms as marks for distinguishing between authentic and counterfeit products have been developed and used. For example, hologram stickers or the like that guarantee authenticity are attached to authentic products, and a particular product attached with a hologram image different from the hologram attached to the authentic product is identified as a counterfeit product.

However, the related-art method of manufacturing a hologram product involves separately producing a hologram-only fabric, a holographic image-imprinted film, an adhesive sticker, and the like and attaching them to each other, and thus, there are issues that producible holographic images are limited, the types of colors that may be implemented are limited, the manufacturing time is long, and the cost is expensive. Therefore, there is an issue that it is practically impossible to mass-produce a variety of security hologram products with high security.

Furthermore, because holograms produced in this manner generally is based on material-based technology, a counterfeit manufacturer may easily counterfeit an authentic product by imitating the material, which makes the security vulnerable, and when the counterfeit manufacturer copies or counterfeit the hologram and distribute counterfeit products, it is difficult to take immediate action and countermeasures are limited.

Therefore, there is an urgent need to develop a holographic image implementation method capable of implementing holographic images with various colors and shapes and saving cost and time, and having low possibility of counterfeiting and duplication.

### DESCRIPTION OF EMBODIMENTS

### TECHNICAL PROBLEM

A hologram color designation system and a hologram color designation method based on a dithering mask according to the present disclosure are to manufacture, rapidly and at low cost, a hologram structure with improved security and capable of implementing various shapes and colors, by encrypting an obtained original image according to a predefined standard and then processing the result to form a pattern of a dithering mask such that a particular color may be expressed in the hologram structure.

### SOLUTION TO PROBLEM

An embodiment of the present disclosure provides a hologram color designation system based on a dithering mask, the hologram color designation system including an image obtaining unit configured to obtain an original image, an encryption unit configured to convert original colors of respective pixels included in the original image into encrypted colors, according to a predefined standard, a pattern data generation unit configured to generate, based on the encrypted colors, pattern data including dithering patterns corresponding to the respective pixels, and a pattern forming unit configured to form, based on the pattern data, a mask pattern on a dithering mask.

### ADVANTAGEOUS EFFECTS OF DISCLOSURE

A hologram color designation system and a hologram color designation method based on a dithering mask according to the present disclosure may manufacture, rapidly and at low cost, a hologram structure with improved security and capable of implementing various shapes and colors, by converting various original images into pattern data regardless of their shape and color, and forming a mask pattern in a dithering mask, based on the pattern data.

### BRIEF DESCRIPTION OF DRAWINGS

FIG. 1 is a diagram schematically illustrating a hologram color designation system based on a dithering mask according to an embodiment of the present disclosure.
FIG. 2 is a diagram illustrating an embodiment of an encryption unit of FIG. 1.
FIG. 3 is a diagram illustrating an embodiment in which the encryption unit of FIG. 1 converts an original color into an encrypted color.
FIG. 4 is a diagram illustrating an embodiment in which the encryption unit of FIG. 1 processes original colors by using a color coordinate system.
FIG. 5 is a diagram illustrating correlation information between standard colors and encrypted colors, which is stored in a first memory of FIG. 2.
FIG. 6 is a diagram illustrating an embodiment of a pattern data generation unit of FIG. 1.
FIG. 7 is a diagram illustrating an embodiment in which the pattern data generation unit of FIG. 1 generates pattern data based on encrypted colors.
FIG. 8 is a diagram illustrating correlation information between encrypted colors and dithering patterns, which is stored in a second memory of FIG. 6.
FIG. 9 is a diagram illustrating an embodiment of correlation information between the encrypted colors and the dithering patterns of FIG. 8.
FIG. 10 is a diagram illustrating an embodiment of converting a combination of encryption colors into pattern data according to correlation illustrated in FIG. 9.
FIG. 11 is a diagram schematically illustrating a hologram color designation system based on a dithering mask according to another embodiment of the present disclosure.
FIG. 12 is a diagram illustrating an embodiment of a result output unit of FIG. 11. FIG. 13 is a diagram illustrating an embodiment in which the result output unit of FIG. 11 outputs a predicted hologram color designation result.
FIG. 14 is a diagram illustrating correlation information between dithering patterns and hologram colors, which is stored in a third memory of FIG. 11.
FIG. 15 is a diagram illustrating color change information according to an emission angle of a light source and color change information according to a viewing angle of an observer.
FIG. 16 is a diagram illustrating an embodiment of correlation information of FIG. 15.
FIG. 17 is a diagram illustrating a result of observing a hologram structure according to the embodiment of FIG. 16.
FIG. 18 is a diagram illustrating correlation information between encrypted colors, dithering patterns, and hologram colors.
FIG. 19 is a diagram illustrating an embodiment of designating a hologram color according to the present disclosure.
FIG. 20 is a diagram illustrating results of observing a plurality of hologram structures for which hologram colors are designated, while changing an emission angle of a light source and a viewing angle of an observer.
FIG. 21 is a diagram illustrating a principle by which a structural color is expressed in a hologram structure.
FIG. 22 is an enlarged view of a hologram image of a hologram structure, and a part thereof.
FIG. 23 is a diagram illustrating a result of analyzing the surface of a micro-sized hologram structure.
FIG. 24 is a diagram schematically illustrating an embodiment of a hologram color designation method based on a dithering mask according to the present disclosure.
FIG. 25 is a diagram schematically illustrating another embodiment of a hologram color designation method based on a dithering mask according to the present disclosure.

### BEST MODE

A hologram color designation system based on a dithering mask according to the present disclosure may include an image obtaining unit configured to obtain an original image, an encryption unit configured to convert original colors of respective pixels included in the original image into encrypted colors, according to a predefined standard, a pattern data generation unit configured to generate, based on the encrypted colors, pattern data including dithering patterns corresponding to the respective pixels, and a pattern forming unit configured to form, based on the pattern data, a mask pattern on a dithering mask.

In addition, the encryption unit may be a unit configured to classify the original colors of the respective pixels included in the original image, according to similarity between the original colors, and convert the original colors classified as similar, into the same encrypted color.

In addition, the encryption unit may be a unit configured to select a position of an original color on a color coordinate system corresponding to each of the original colors, and select, from among positions of standard colors on the color coordinate system corresponding to a plurality of preset standard colors, the position of the standard color closest to the position of the original color, so as to classify the original colors for which the position of the same standard color is selected, as similar.

In addition, the pattern data generation unit may be a unit configured to convert the encrypted colors into dithering patterns corresponding to the encrypted colors in a one-to-one manner.

In addition, the hologram color designation system may further include a result output unit configured to output a predicted hologram color designation result, based on information about the hologram colors expressed by the dithering pattern.

In addition, the result output unit may be a unit including information about changes in the hologram colors according to an emission angle of a light source, for outputting the predicted hologram color designation result.

In addition, the result output unit may be a unit including information about changes in the hologram colors according to a viewing angle of an observer, for outputting the predicted hologram color designation result.

A hologram color designation method based on a dithering mask according to the present disclosure may include
an image obtaining operation of obtaining an original image, an encryption operation of converting original colors of respective pixels included in the original image into encrypted colors, according to a predefined standard, a pattern data generation operation of generating, based on the encrypted colors, pattern data including dithering patterns corresponding to the respective pixels, and a pattern forming operation of forming, based on the pattern data, a mask pattern on a dithering mask.

In addition, the encrypting operation may be an operation of classifying the original colors of the respective pixels included in the original image according to similarity between the original colors, and converting the original colors classified as similar, into the same encrypted color.

In addition, the encryption operation may be an operation of selecting a position of an original color on a color coordinate system corresponding to each of the original colors, and selecting, from among positions of standard colors on the color coordinate system corresponding to a plurality of preset standard colors, the position of the standard color closest to the position of the original color, so as to classify the original colors for which the position of the same standard color is selected, as similar.

In addition, the pattern data generation operation may be an operation of converting the encrypted colors into dithering patterns corresponding to the encrypted colors in a one-to-one manner.

In addition, the hologram color designation method may further include a result output operation of outputting a predicted hologram color designation result, based on information about the hologram colors expressed by the dithering pattern.

In addition, the result output operation may be an operation of outputting the predicted hologram color designation result, based on information about changes in the hologram colors according to an emission angle of a light source.

In addition, the result output operation may be an operation of outputting the predicted hologram color designation result, based on information about changes in the hologram colors according to a viewing angle of an observer.

### MODE OF DISCLOSURE

The inventors may select or define appropriate terms or words to explain the present disclosure, and in this case, the terms or words used herein should not be interpreted limitedly to their commonly used meanings, but should be interpreted so as to conform to the technical idea embodied in the present disclosure in consideration of the intention of the inventors.

Accordingly, the terms or words used in the present specification and the claims cannot be regarded as being limited to their commonly used meanings. The descriptions provided below are merely preferred embodiments of the present disclosure and will not represent or limit all the present technical idea, and thus. examples corresponding to elements and equivalents that may be easily replaced by those of skill in the art may exist.

Hereinafter, based on the above-described principle, a hologram color designation system 100 and a hologram color designation method based on a dithering mask according to the present disclosure will be described in detail with reference to the drawings.

The hologram color designation system and the hologram color designation method based on a dithering mask according to the present disclosure are to form a pattern on a photomask that is used in photolithography. That is, the present disclosure may be used to form a particular pattern on a photomask used in a photolithography process for manufacturing a hologram structure.

The hologram structure referred to in the present specification refers to a structure on which a diffraction grating pattern structure is formed, for implementing a hologram. In detail, the hologram structure refers to a structure in which a diffraction grating pattern structure is formed to express a structural color.

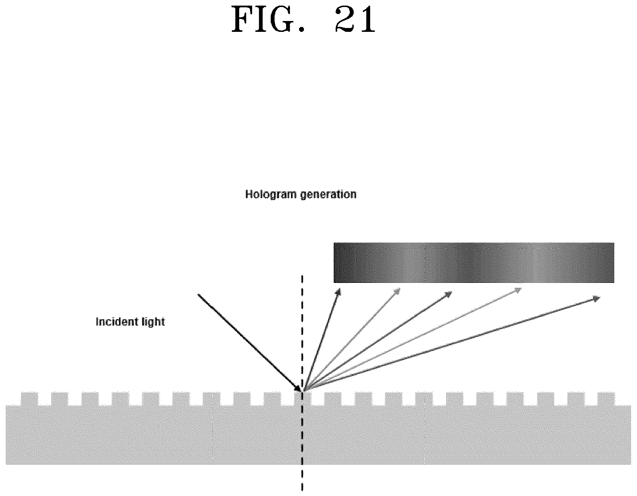

The structural color refers to a color implemented by the structure of an object without depending on the color itself, as illustrated in FIG. 21. That is, the structural color refers to a color implemented by reflection, diffraction, interference, etc. of light.

A photomask on which a pattern is formed according to the present disclosure is to express a structural color by forming a diffraction grating pattern on a hologram structure, and may preferably be a dithering mask having a dithering pattern formed thereon.

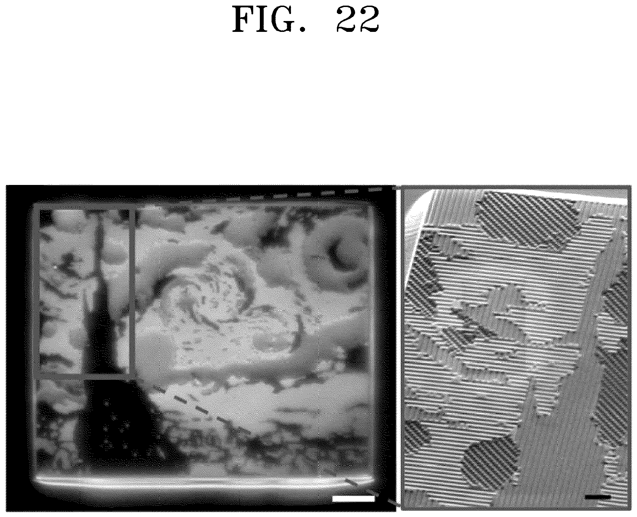

For example, as illustrated in FIG. 22, when a particular diffraction grating pattern is formed on a hologram structure, a particular hologram color may be implemented.

Meanwhile, a structural color implemented by a hologram may vary depending on a diffraction grating pattern to be formed. That is, the diffraction grating pattern formed on the hologram structure may vary depending on which pattern is formed on the photomask, and accordingly, the color emitted by the hologram structure changes. Therefore, according to the present disclosure, a color expressed by a hologram structure may be designated by forming a particular pattern on a photomask.

Thus, in the the present specification, a pattern formed on a photomask to correspond to a particular diffraction grating pattern to be formed on a hologram structure is defined as a dithering pattern (DP). In addition, the photomask on which the dithering pattern (DP) is formed is defined as a dithering mask. In addition, the pattern formed on the dithering mask is defined as a mask pattern. In addition, a color expressed by the hologram structure is defined as a hologram color (HC).

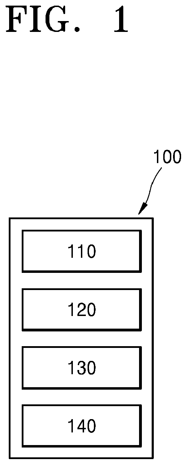

FIG. 1 is a diagram schematically illustrating the hologram color designation system 100 based on a dithering mask according to an embodiment of the present disclosure.

Referring to FIG. 1, the hologram color designation system 100 according to the present disclosure may include an image obtaining unit 110 configured to obtain an original image (Ol), an encryption unit 120 configured to convert an original color (OC) of each of the pixels included in the original image (Ol) into an encrypted color (EC) according to a predefined standard, a pattern data generation unit 130 configured to generate, based on the encrypted color (EC), pattern data (PD) including a dithering pattern (DP) corresponding to each pixel, and a pattern forming unit 140 configured to form, based on the pattern data (PD), a mask pattern on the dithering mask.

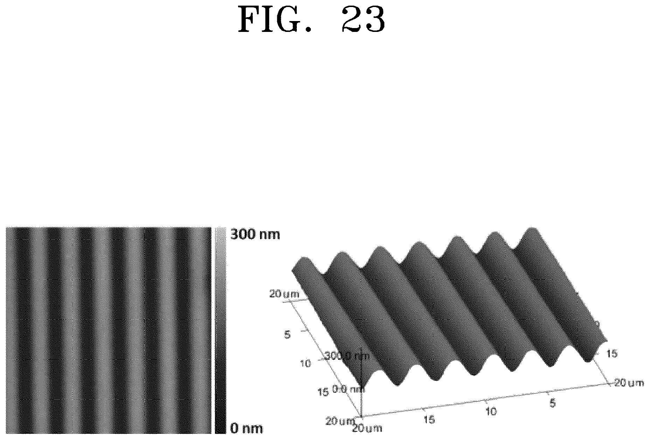

The system 100 may be used to designate a hologram color (HC) to be expressed by a hologram structure by forming a particular mask pattern on a dithering mask. That is, a hologram structure in which a particular hologram color (HC) is expressed may be manufactured by performing photolithography by using a dithering mask having a mask pattern formed thereon by the system 100. Meanwhile, in a case in which such a dithering mask is used, as illustrated in FIG. 23, a micro-sized hologram structure may be manufactured.

The image obtaining unit 110 is a unit configured to obtain an original image (OI) to be implemented as a hologram. Here, the original image (OI) is not limited.

In an embodiment, the image obtaining unit 110 may be a unit configured to obtain data by directly capturing an original image to be implemented as a hologram, and converting the original image into the data. For example, the image obtaining unit 110 may be a unit configured to obtain data by capturing an image of paper, a plastic board, a wooden board, a rubber board, an object having a stereoscopic shape, or the like on which an original image is printed or expressed, and converting the image into the data. Here, the original image is not limited and may be a picture, a photograph, a text, a figure, an autograph, a combination of colors, etc.

In another embodiment, the image obtaining unit 110 may be a unit configured to receive and load a file containing a picture, a photograph, a text, a figure, an autograph, a combination of colors, etc. to be implemented as a hologram. For example, the image obtaining unit 110 may be a unit configured to obtain an original image by loading an image file that is a result of conversion into data.

The obtained original image (OI) may consist of a plurality of pixels, and each pixel may have a particular color. Here, the color of each pixel of the original image may be defined as an original color (OC).

The system 100 may further include a unit configured to recognize the original color (OC) of each of the pixels included in the original image, in order to convert each original color (OC) into an encrypted color (EC).

In an alternative embodiment, the unit configured to recognize the original color (OC) of each pixel may be included in the image obtaining unit 110.

In another alternative embodiment, the unit configured to recognize the original color (OC) of each pixel may be included in the encryption unit 120.

In yet another alternative embodiment, the unit configured to recognize the original color (OC) of each pixel may be included in the the system 100.

The encryption unit 120 may be a unit configured to convert the original color (OC) of each of the pixels included in the original image (Ol) into an encrypted color (EC) according to a predefined standard. In detail, a particular color may be assigned by encrypting the original color (OC) according to the predefined standard. Here, the particular color that is assigned by performing encryption according to the predefined standard is defined as an encrypted color (EC).

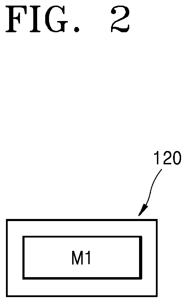

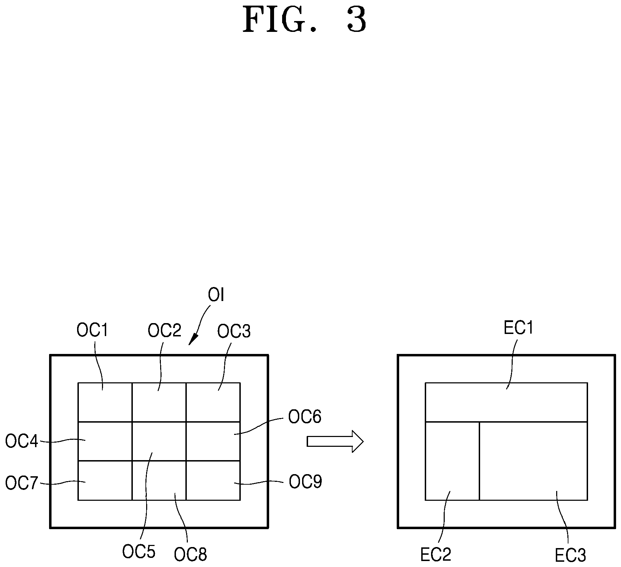

FIG. 2 is a diagram illustrating an embodiment of the encryption unit 120 of FIG. 1, and FIG. 3 is a diagram illustrating an embodiment in which the encryption unit 120 of FIG. 1 converts an original color (OC) into an encrypted color (EC).

Referring to FIG. 2, in an embodiment, the encryption unit 120 may include a first memory M1 storing a first program P1. Here, the first program P1 may be to convert the original color (OC) into the encrypted color (EC).

According to a preferred embodiment, the first program P1 may be to cause the encryption unit 120 to classify the original color (OC) of each of the pixels included in the original image (Ol) according to similarity therebetween, and assign the same encrypted color (EC) to the original colors (OC) classified as similar. This may be one encryption process.

An embodiment will be described with reference to FIG. 3. For example, an original image consists of 9 pixels, and the pixels has corresponding original colors OC1 to OC9. The encryption unit 120 may classify the original colors (OC) according to similarity therebetween, according to a predefined standard. In the present example, the first original color OC1 to the third original color OC3 may be classified as similar, the fourth original color OC4 and the seventh original color OC7 may be classified as similar, and the fifth original color OC5, the sixth original color OC6, the eighth original color OC8, and the ninth original color OC9 may be classified as similar.

The original colors (OC) classified as similar may be converted into the same encrypted color (EC). That is, the first to third original colors OC1 to OC3 may be converted into a first encrypted color EC1, the fourth original color OC4 and the seventh original color OC7 may be converted into a second encrypted color EC2, and the fifth original color OC5, the sixth original color OC6, the eighth original color OC8, and the ninth original color OC9 may be converted into a third encrypted color EC3.

Accordingly, the original image may be divided into a plurality of regions, based on similarity between the colors of the pixels, and thus may be converted into encrypted regions to which a plurality of encrypted colors EC1 to EC3 are assigned.

Meanwhile, a plurality of encrypted colors (EC) may be set.

In an alternative embodiment, the encryption unit 120 may use red, green, and blue encrypted colors (EC) by using a red-green-blue (RGB) system. In this case, the original colors (OC) may be classified, by the first program P1, into three or less regions according similarity therebetween.

In another embodiment, the encryption unit 120 may use red, green, blue, and white encrypted colors (EC) by using a red-green-blue-white (RGBW) system. In this case, the original colors (OC) may be classified, by the first program P1, into four or less regions according similarity therebetween.

However, the present disclosure is not limited thereto, and it is needless to say that the encryption unit 120 may generate a combination of more diverse encrypted colors (EC) by using more than 4 encrypted colors (EC).

Meanwhile, the colors of the original image (OI) may be simplified after the encryption. That is, because the original image (OI) may be divided into as many regions as the number of preset encrypted colors (EC), the color combination may be simplified.

In detail, in a case in which the types of the recognized original colors (OC) are more diverse than those of the preset encrypted colors (EC), the original image is divided into regions, the number of which is less than or equal to the number of encrypted colors (EC), and as will be described below, corresponding dithering patterns (DP) are assigned to the respective regions, and thus, the original image is implemented with a smaller number of hologram colors (HC). Thus, the original image may be simplified in terms of color.

In the example illustrated in FIG. 3, the original image (OI) originally includes nine original colors (OC), but after the encryption by the encryption unit, the original image (OI) may be assigned three encrypted colors (EC), and eventually simplified with three hologram colors (HC).

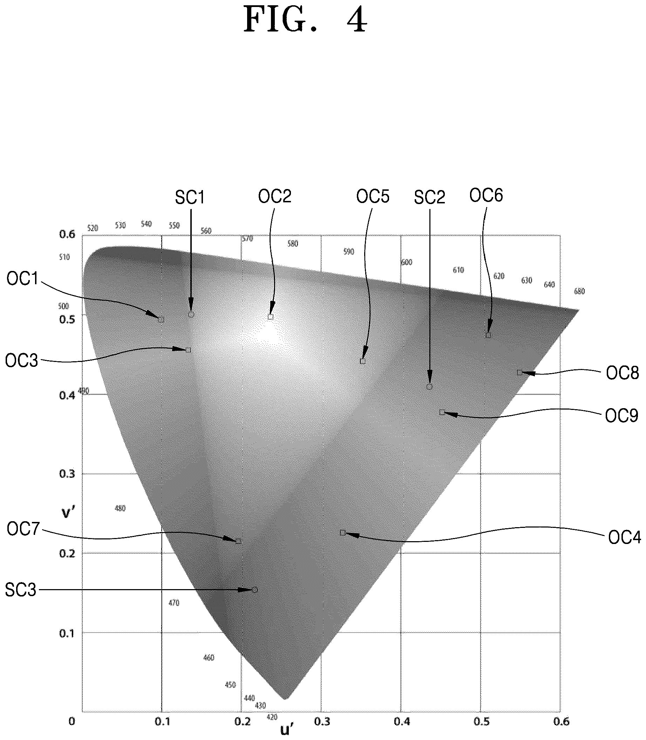

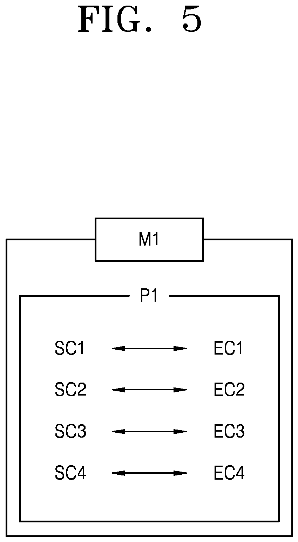

Referring to FIGS. 4 and 5, the encryption unit 120 may use a color coordinate system to determine whether the original colors (OC) have similar colors.

FIG. 4 is a diagram illustrating an embodiment in which the encryption unit 120 of FIG. 1 processes original colors (OC) by using a color coordinate system, and FIG. 5 is a diagram illustrating correlation information between standard colors (SC) and encrypted colors (EC), which is stored in the first memory M1.

The color coordinate system may be a chart representing various colors as coordinates such that all colors are represented. For example, the color coordinate system may be established as a standard by the Commission Internationale de I'Eclairage (CIE). However, the color coordinate system to be used is not limited to the above example, and a color coordinate system separately produced according to the purpose, or other color coordinate systems may be used, but preferably, a color coordinate system in which all colors are represented may be used.

The encryption unit 120 may select the position of the original color (OC) on the color coordinate system corresponding to each original color (OC), and select, from among the positions of standard colors (SC) on the color coordinate system respectively corresponding to a plurality of preset standard colors (SC), the position of the standard color (SC) closest to the position of the selected original color (OC), so as to classify the original colors (OC) for which the position of the same reference color (SC) is selected, as similar.

Here, a color used as a standard to classify the original colors (OC) as similar is defined as a standard color (SC). This algorithm may be encoded in the first program P1.

In an alternative embodiment, the standard color (SC) may be a color arbitrarily set to classify the original colors (OC) as similar.

In another embodiment, a color that may be implemented as a hologram may be used as the standard color (SC). For example, a particular hologram color (HC) that may be implemented as a hologram may be used as the standard color (SC).

In another embodiment, an encrypted color (EC) may be used as the standard color (SC). For example, the original colors (OC) may be classified based on the preset encrypted colors (EC) as the standard colors (SC).

An embodiment in which the encryption unit 120 encrypts an original image OI illustrated in FIG. 3 by using a color coordinate system will be described with reference to FIGS. 3 and 4.

According to the present embodiment, three standard colors SC1, SC2, and SC3 are set, and positions corresponding thereto on the color coordinate system are set. After recognizing the original colors OC1 to OC9 from the original image OI, positions on the color coordinate system corresponding to the respective original colors (OC) are selected. Then, after calculating the distances between the position of the selected original color (OC) and the positions of the preset standard colors (SC), the standard color (SC) with the lowest distance is selected.

For example, because the first original color OC1 is closest to the first standard color SC1, the first standard color SC1 is selected for the first original color OC1. When the above process is performed for the remaining original colors (OC), the first standard color SC1 may be selected for the first original color OC1 to the third original color OC3, the second standard color SC2 may be selected for the fourth original color OC4 and the seventh original color OC7, and the standard color SC3 may be selected for the fifth original color OC5, the sixth original color OC6, the eighth original color OC8, and the ninth original color OC9. Based on the selection, the original colors (OC) for which the same standard color (SC) is selected may be classified as similar, and the same encrypted color (EC) may be assigned to each of the original colors (OC).

The encryption unit 120 may classify the original color (OC) based on the standard colors (SC), and then assign an encrypted color (EC) corresponding to the original color (OC). To this end, referring to FIG. 5, correlation information in which the standard colors (SC) and the encrypted colors (EC) correspond to each other may be encoded in the first program P1. Here, it is needless to say that the standard colors (SC) and the encrypted colors (EC) may be arbitrarily matched to each other. As such, by establishing a matching relationship between the standard colors (SC) and the encrypted colors (EC), the system 100 may make it possible to manufacture a hologram structure with improved security.

As described above, as the encryption unit 120 encrypts an original image, the original image may be simplified. That is, because the number of standard colors (SC) is less than the number of all colors represented by the color coordinate system, when an original image contains more original colors (OC) than the preset standard colors (SC), the colors of the original image may be entirely simplified.

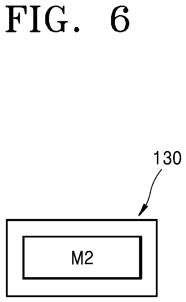

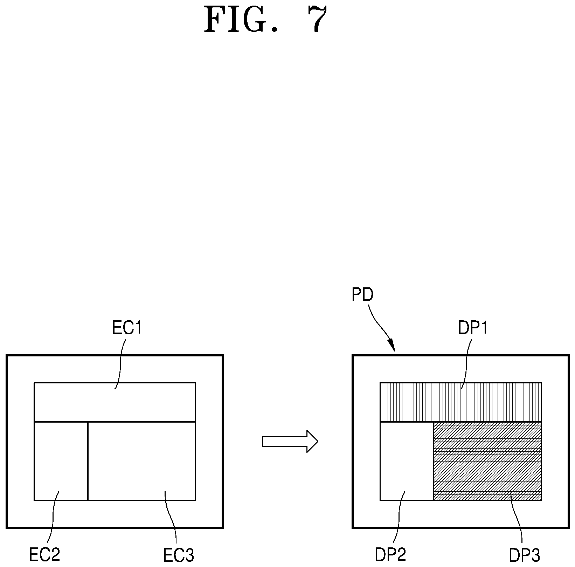

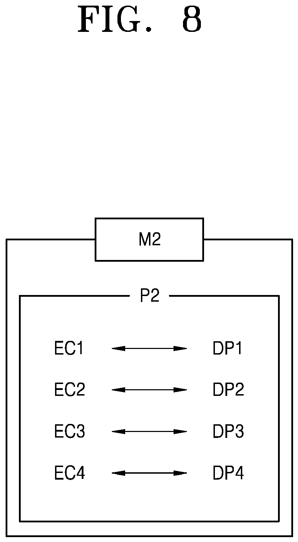

FIG. 6 is a diagram illustrating an embodiment of the pattern data generation unit 130 of FIG. 1, FIG. 7 is a diagram illustrating an embodiment in which the pattern data generation unit 130 of FIG. 1 generates pattern data PD based on encrypted colors (EC), and FIG. 8 is a diagram illustrating correlation information between encrypted colors (EC) and dithering patterns (DP), which is stored in a second memory M2 of FIG. 6.

Referring to FIGS. 6 to 8, the pattern data generation unit 130 may be a unit configured to generate, based on the encrypted colors (EC), the pattern data PD including the dithering patterns (DP) corresponding to respective pixels. That is, the pattern data generation unit 130 may be a unit configured to convert the encrypted colors (EC) into the dithering patterns (DP) corresponding to the encrypted colors (EC) in a one-to-one manner.

In an embodiment, the pattern data generation unit 130 may include the second memory M2 storing a second program P2. Here, the second program P2 may be to convert encrypted colors (EC) into dithering patterns (DP).

According to a preferred embodiment, the second program P2 may be to convert encrypted colors (EC) into dithering patterns (DP), which are preset to correspond to the encrypted colors (EC) in a one-to-one manner.

To this end, referring to FIG. 8, correlation information in which the encrypted colors (EC) and the dithering patterns (DP) correspond to each other may be encoded in the second program P2. Here, it is needless to say that the encrypted colors (EC) and the dithering patterns (DP) may be arbitrarily matched to each other.

An embodiment in which the pattern data generation unit 130 converts encrypted color (EC) into dithering pattern (DP) will be described with reference to FIGS. 7 and 8.

According to the present embodiment, a first encrypted color EC1 corresponds to a first dithering pattern DP1, a second encrypted color EC2 corresponds to a second dithering pattern DP2, a third encrypted color EC3 corresponds to a third dithering pattern DP3, and a fourth encrypted color EC4 corresponds to a fourth dithering pattern DP4. Thus, according to the above correspondence information, the first encrypted color EC1 may be converted into the first dithering pattern DP1, the second encrypted color EC2 may be converted into the second dithering pattern DP2, and the third encrypted color EC3 may be converted into the third dithering pattern DP3.

As such, in a case in which the encrypted colors EC1, EC2, and EC3 are converted into the corresponding dithering patterns DP1, DP2, and DP3, respectively, the pattern data PD in which the dithering patterns (DP) are combined with each other may be generated. That is, the pattern data PD including the dithering patterns DP1, DP2, and DP3 corresponding to the respective pixels may be generated based on the encrypted colors EC1, EC2, and EC3.

As a result, encrypted data consisting of a combination of the first encrypted color EC1 to the third encrypted color EC3 be converted into the pattern data PD consisting of a combination of the first dithering pattern DP1 to the third dithering pattern DP3.

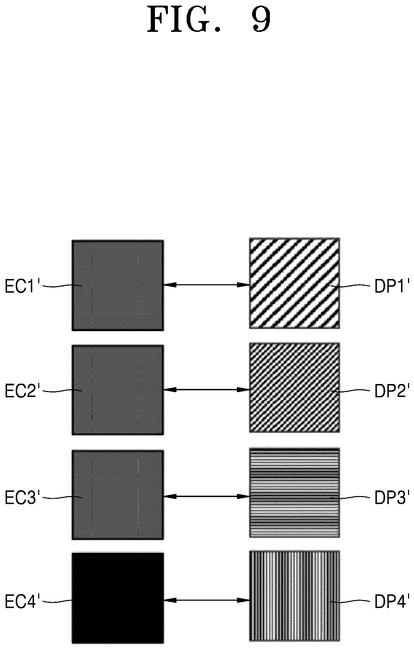

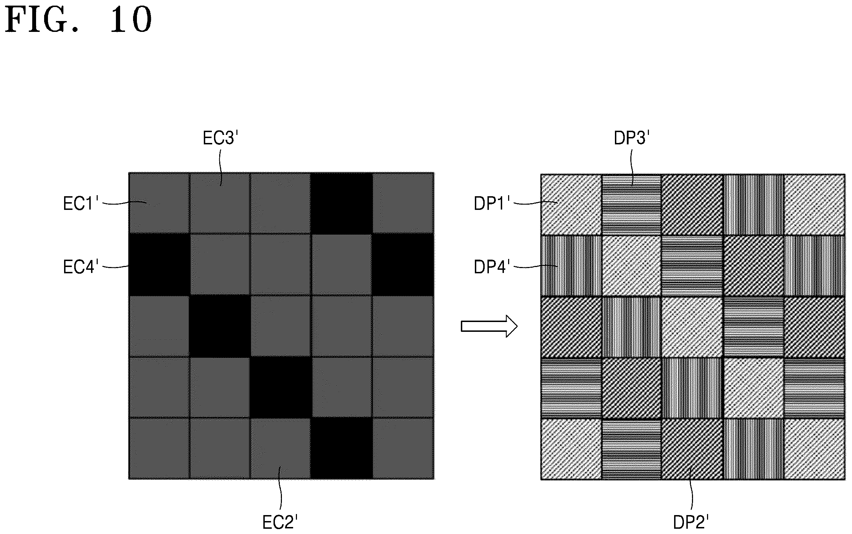

FIG. 9 is a diagram illustrating an embodiment of correlation information between encrypted colors EC1' to EC4' and dithering patterns DP1' to DP4' of FIG. 8, and FIG. 10 is a diagram illustrating an embodiment of converting a combination of encryption colors EC' into pattern data (PD) according to correlation illustrated in FIG. 9.

Referring to FIGS. 9 and 10, each encrypted color EC' may be encoded to correspond a particular dithering pattern DP' in a one-to-one manner, and by using this information, data consisting of a combination of the encryption colors EC' may be converted into pattern data (PD) in which dithering patterns DP' are combined with each other to correspond to the combination of the encryption colors EC'.

Meanwhile, the generated pattern data (PD) may be implemented in a dithering mask through the pattern forming unit 140. The pattern forming unit 140 may be a unit configured to form a mask pattern on a dithering mask, based on the pattern data (PD).

The pattern forming unit 140 may be any unit capable of implementing a mask pattern in a dithering mask. For example, the pattern forming unit 140 may be a unit configured to print a mask pattern on a dithering mask, but is not limited thereto.

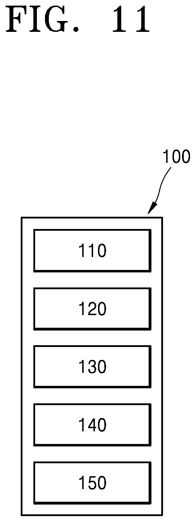

FIG. 11 is a diagram schematically illustrating the hologram color (HC) designation system 100 based on a dithering mask according to another embodiment of the present disclosure.

Referring to FIG. 11, the system 100 according to the present disclosure may further include a result output unit 150 configured to output a predicted hologram color (HC) designation result, based on information about a hologram color (HC) expressed by a dithering pattern (DP).

For example, the result output unit 150 may be a unit configured to output result data for predicting which hologram color (HC) is to be designated for a hologram structure to be produced through the pattern data (PD). The result data may be monitored through a separate display device, may be stored as a separate file as needed, and may be printed as needed.

As such, it is possible to determine whether a hologram is a counterfeit, by determining whether an actually produced hologram structure corresponds to a result output by the result output unit 150.

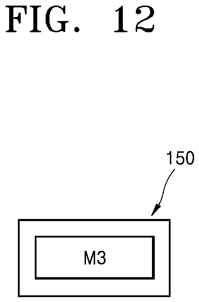

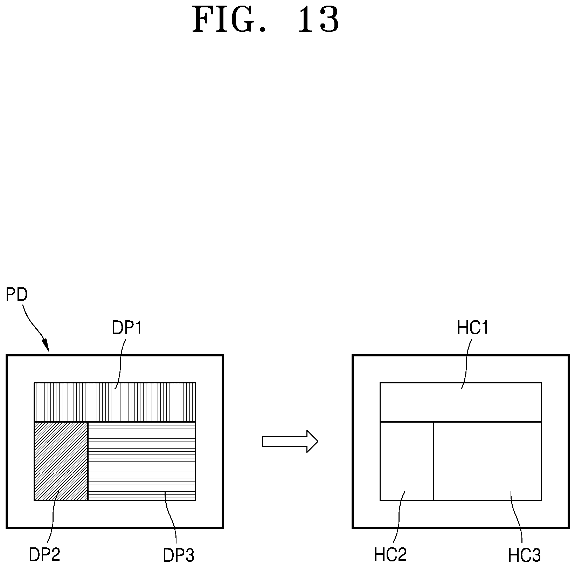

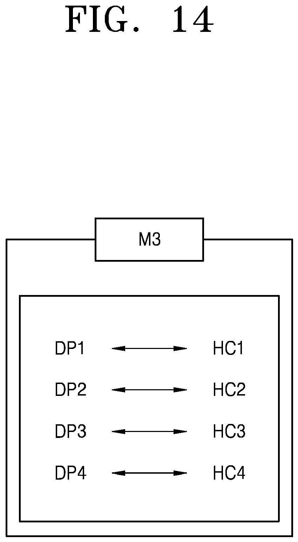

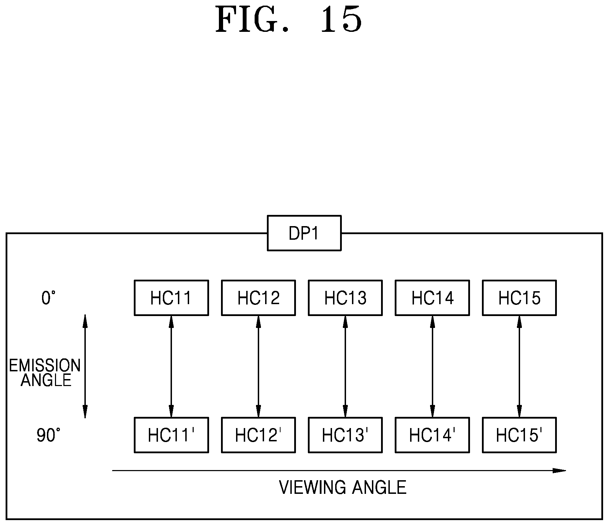

FIG. 12 is a diagram illustrating an embodiment of the result output unit 150 of FIG. 11, FIG. 13 is a diagram illustrating an embodiment in which the result output unit 150 of FIG. 11 outputs a predicted hologram color (HC) designation result, FIG. 14 is a diagram illustrating correlation information between dithering patterns DP and hologram colors HC, which is stored in a third memory M3 of FIG. 11, and FIG. 15 is a diagram illustrating color change information according to an emission angle of a light source and color change information according to an emission angle of a light source.

In a case in which a hologram structure is manufactured by using a dithering mask having a mask pattern formed thereon, a diffraction grating pattern corresponding to the mask pattern may be formed on the hologram structure. Here, the diffraction grating pattern formed on the hologram structure may implement a particular hologram color (HC) when irradiated with a light source.

In detail, a particular diffraction grating pattern expresses a particular hologram color (HC) according to an emission angle of a light source or a viewing angle of an observer. Here, the hologram color (HC) expressed according to the particular diffraction grating pattern is determined according to the expression principle of the structural color, and thus cannot be arbitrarily matched. In addition, diffraction grating patterns for expressing colors, even those appearing similar to the naked eye, may be different from each other.

Accordingly, a hologram color (HC) to be implemented and a dithering pattern (DP) for designating the hologram color (HC) need to be matched to each other and encoded in advance. That is, dithering pattern (DP) information for expressing the particular hologram color (HC) needs to be matched and input in advance.

To this end, in an embodiment, the result output unit 150 may include the third memory M3 storing a third program P3. The third program P3 may be to derive a predicted hologram color (HC) designation result, from pattern data (PD).

According to a preferred embodiment, as illustrated in FIG. 14, the third program P3 may include correlation information between dithering patterns (DP) and hologram colors (HC) expressed by a hologram structure.

An embodiment in which the result output unit 150 derives a predicted hologram color (HC) designation result, from pattern data (PD) will be described with reference to FIGS. 13 and 14.

According to the present embodiment, the third program P3 may include information in which the first dithering pattern DP1 corresponds to a first hologram color HC1, the second dithering pattern DP2 corresponds to a second hologram color HC2, and the third dithering pattern DP3 corresponds to a third hologram color HC3. Thus, a hologram color (HC) designation result in which the first hologram color HC1 to the third hologram color HC3 are combined with each other may be output by using the pattern data (PD) in which the first dithering pattern DP1 to the third dithering pattern DP3 are combined with each other.

Meanwhile, a hologram color (HC) of a hologram structure having a diffraction grating pattern formed thereon may change according to an emission angle of a light source. Also, the hologram color (HC) of the hologram structure having the diffraction grating pattern formed thereon may change according to a viewing angle of an observer.

Thus, the third program P3 may further include, in addition to the dithering patterns (DP) and the hologram colors (HC) corresponding thereto, hologram color (HC) change information according to an emission angle of a light source and hologram color (HC) change information according to a viewing angle of an observer.

As illustrated in FIG. 15, a hologram color (HC) expressed by a hologram structure on which a diffraction grating pattern corresponding to the first dithering pattern DP1 is formed may change according to an emission angle of a light source, and the third program P3 may further include information about such change. For example, a hologram color HC11 expressed when the emission angle of the light source is 0° changes to another hologram color HC11' when the emission angle of the light source changes to 90°, and information about such change may be included in the third program P3.

In addition, a hologram color (HC) expressed by a hologram structure on which a diffraction grating pattern corresponding to the first dithering pattern DP is formed may change according to a viewing angle of an observer, and the third program P3 may further include information about such change. For example, as the viewing angle of the observer increases, the hologram color HC11 may sequentially change to HC12, HC13, HC14, and HC15.

As such, a change in the hologram color (HC) according to a change in the emission angle of the light source and the angle of view of the observer may greatly improve the security of the hologram structure manufactured by the system 100.

That is, the dithering patterns (DP) for expressing colors, even those appearing similar to the naked eye, may be different from each other, and the change in the hologram color (HC) according to the change in the emission angle of the light source or the viewing angle of the observer may greatly vary depending on the different dithering patterns (DP). Thus, the security of the hologram structure may be greatly improved.

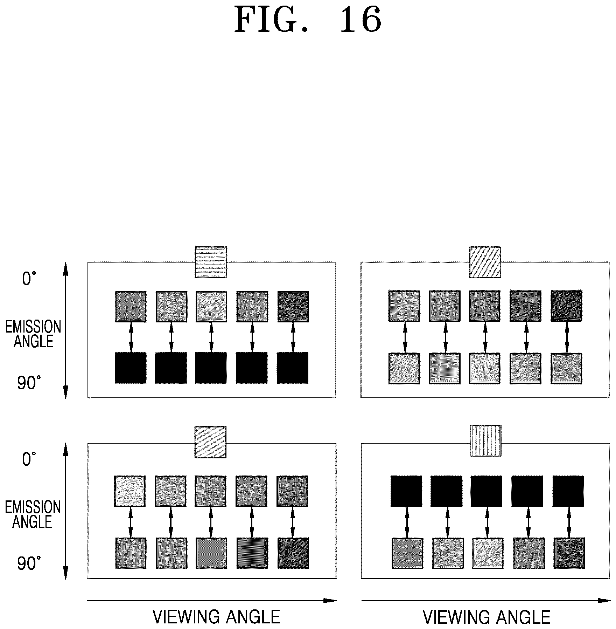

FIG. 16 is a diagram illustrating an embodiment of the correlation information of FIG. 15. It may be seen, from FIG. 16, that hologram colors (HC) expressed by respective dithering patterns (DP) are different from each other, and that the expressed hologram colors (HC) change according to an emission angle of a light source and a viewing angle of an observer.

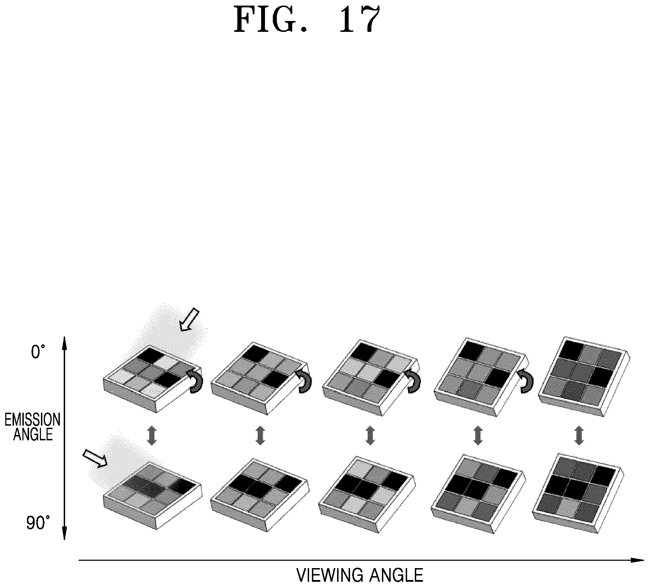

FIG. 17 is a diagram illustrating a result of observing a hologram structure manufactured according to the information according to the embodiment of FIG. 16.

For example, in a hologram structure in which a horizontal-line dithering pattern (DP) of FIG. 16 is implemented, when the emission angle of the light source is 0°, a region expressing a blue hologram color (HC) exists, and when the emission angle of the light source changes to 90°, the region expresses a black hologram color (HC) illustrated in the lower side. For example, it may be seen, from the two holograms in the first column of FIG. 17, that the blue and black colors are inverted from each other according to a change in the emission angle of the light source.

In addition, a hologram structure in which the horizontal-line dithering pattern (DP) of FIG. 16 is implemented, the hologram color (HC) changes to blue, sky blue, jade, yellow, and red as the viewing angle of the observer increases. For example, it can be seen, from the holograms in the first row of FIG. 17, that a region expressing a blue hologram color (HC) changes to sky blue, jade blue, yellow, and red as the viewing angle changes.

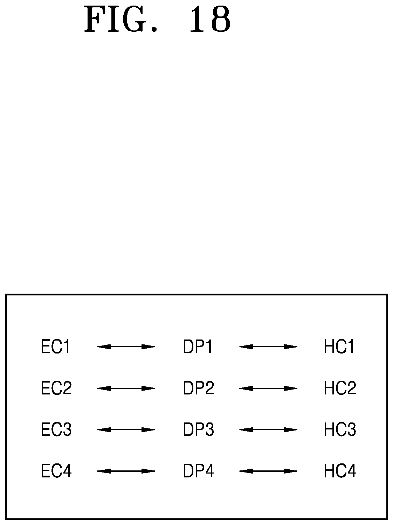

FIG. 18 is a diagram illustrating correlation information in which encrypted colors (EC), dithering patterns (DP), and hologram colors (HC) are entirely matched to each other.

According to an embodiment, the encrypted colors (EC), the dithering patterns (DP), and the hologram colors (HC) may be entirely matched to each other. In this case, a hologram color (HC) to be implemented when a particular encrypted color (EC) is assigned may be predicted.

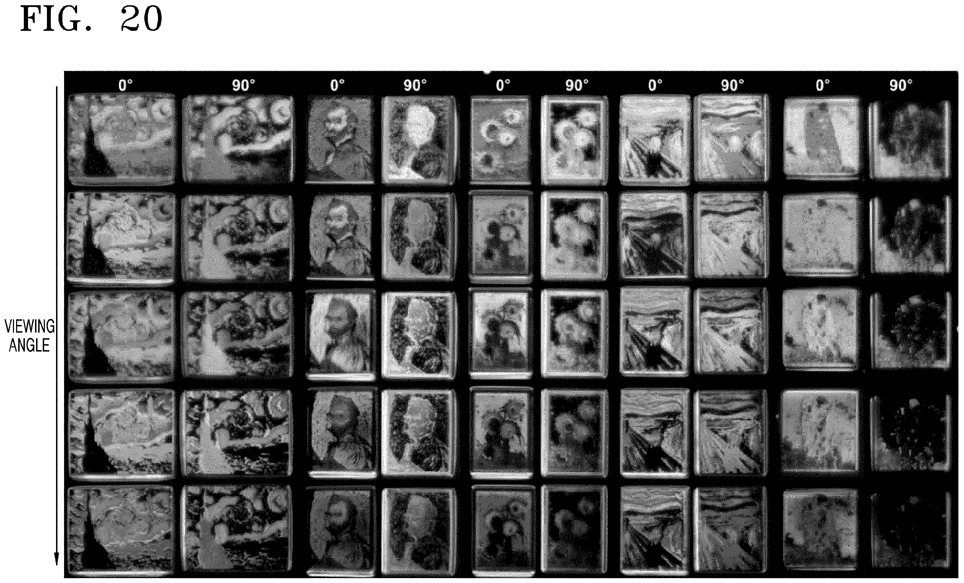

FIG. 20 is a diagram illustrating results of observing a plurality of hologram structures to which hologram colors (HC) are designated by the system 100, while changing an emission angle of a light source and a viewing angle of an observer.

It may be seen, from FIG. 20, that the type of original image that may be implemented as a hologram is not limited. In addition, it may be seen that a hologram color (HC) expressed by a manufactured hologram structure changes according to the emission angle of the light source and the viewing angle of the observer.

Therefore, with a hologram color (HC) designated by the system 100, a hologram structure with improved security may be manufactured. In addition, an original image may be implemented as a hologram regardless of the type of the original image, such as a picture, a photograph, a text, a figure, an autograph, or a combination of colors.

Meanwhile, the hologram color (HC) designation system 100 based on a dithering mask according to the present disclosure may include, in one device, the image obtaining unit 110, the encryption unit 120, the pattern data generation unit 130, the pattern forming unit 140, and the result output unit 150.

In another alternative embodiment, the hologram color (HC) designation system 100 based on a dithering mask according to the present disclosure may include, in two or more devices, the image obtaining unit 110, the encryption unit 120, the pattern data generation unit 130, the pattern forming unit 140, and the result output unit 150.

Hereinafter, a hologram color (HC) designation method based on a dithering mask according to the present disclosure will be described. For convenience of description, descriptions provided above regarding the hologram color (HC) designation system 100 will be omitted or briefly provided, and an embodiment in which a hologram color (HC) is designated according to the present disclosure will be mainly described.

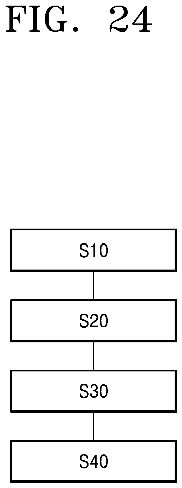

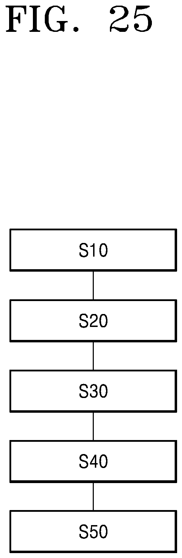

FIG. 24 is a diagram schematically illustrating an embodiment of a hologram color (HC) designation method based on a dithering mask according to the present disclosure, and FIG. 25 is a diagram schematically illustrating another embodiment of a hologram color (HC) designation method based on a dithering mask according to the present disclosure.

Referring to FIG. 24, the hologram color (HC) designation method based on a dithering mask according to the present disclosure may include an image obtaining operation (S10) of obtaining an original image (OI), an encryption operation (S20) of converting an original color (OC) of each of pixels included in the original image into encrypted colors (EC) according to a predefined standard, a pattern data generation operation (S30) of generating pattern data (PD) including dithering patterns (DP) corresponding to the respective pixels, based on the encrypted colors (EC), and a pattern forming operation (S40) of forming a mask pattern on a dithering mask, based on the pattern data (PD).

The image obtaining operation (S10) is an operation of obtaining an original image to be implemented as a hologram. Here, the original image is not limited and may be a picture, a photograph, a text, a figure, an autograph, a combination of colors, etc.

The image obtaining operation (S10) may be, for example, an operation of capturing an image of paper, a plastic board, a wooden board, a rubber board, an object having a stereoscopic shape, or the like on which an original image to be implemented as a hologram is printed or expressed, and converting the image into data.

As another example, the image obtaining operation (S10) may be an operation of receiving and loading a file containing an original image to be implemented as a hologram.

The obtained original image (OI) may consist of pixels. Thus, an operation of recognizing an original color (OC) of each of the pixels included in the original image may be further included, when necessary.

After recognizing the original color (OC) of each of the pixels included in the original image, the encryption operation (S20) may be performed.

The encryption operation (S20) may be an operation of converting the original color (OC) of each of the pixels included in the original image into an encrypted color (EC) according to a predefined standard. In detail, a particular color may be assigned by encrypting the original color (OC) according to the predefined standard.

According to a preferred embodiment, the encryption operation (S20) may be an operation of classifying the original colors (OC) of the respective pixels included in the original image (OI) according to similarity therebetween, and assigning the same encrypted color (EC) to the original colors (OC) classified as similar. This may be one encryption operation.

As such, the original image may be divided into a plurality of regions, based on similarity between the colors of the pixels, and thus may be converted into encrypted regions to which a plurality of encrypted colors are assigned.

Meanwhile, in the encryption operation (S20), it may be determined whether the original colors (OC) are similar to each other, by using a color coordinate system.

For example, in the encryption operation (S20), the position of the original color (OC) on the color coordinate system corresponding to each original color (OC) may be selected, and the position of the standard color (SC) closest to the position of the original color (OC) may be selected from among the positions of standard colors (SC) on the color coordinate system respectively corresponding to a plurality of preset standard colors (SC), so as to classify the original colors (OC) for which the position of the same reference color (SC) is selected, as similar. However, the process of encrypting the original image by using the color coordinate system is the same as described above.

The pattern data generation operation (S30) may be an operation of generating pattern data (PD) including dithering patterns (DP) corresponding the pixels, respectively, based on the encrypted colors (EC). That is, the pattern data generation operation (S30) may be an operation of converting the encrypted colors (EC) into the dithering patterns (DP) corresponding to the encrypted colors (EC) in a one-to-one manner.

Correlation information and the process for converting the encrypted colors (EC) to the dithering patterns (DP) are the same as described above.

Accordingly, in a case in which the encrypted colors (EC) are converted into the dithering patterns (DP) corresponding thereto, the pattern data (PD) in which the dithering patterns (DP) are combined with each other may be generated. That is, the pattern data (PD) including the dithering patterns (DP) corresponding to the respective pixels may be generated based on the encrypted colors (EC).

Meanwhile, the generated pattern data (PD) may be implemented in a dithering mask through the pattern forming operation (S40). That is, the pattern forming operation (S40) may be an operation of forming a mask pattern on the dithering mask, based on the pattern data (PD).

For example, the pattern forming operation (S40) may be an operation of printing a mask pattern on a dithering mask, but is not limited thereto.

Meanwhile, referring to FIG. 25, the hologram color (HC) designation method according to the present disclosure may further include a result output operation (S50) of outputting a predicted hologram color (HC) designation result, based on information about a hologram color (HC) expressed by a dithering pattern (DP).

For example, the result output operation (S50) may be an operation of outputting result data for predicting which hologram color (HC) is to be designated for a hologram structure to be produced through the pattern data (PD). The result data may be monitored through a separate display device, may be stored as a separate file as needed, and may be printed as needed.

As such, it is possible to determine whether a hologram is a counterfeit, by determining whether an actually produced hologram structure corresponds to a result output through the result output operation (S50).

Meanwhile, in an embodiment, the result output operation (S50) may be performed by using at least one of hologram color (HC) change information according to an emission angle of a light source and hologram color (HC) change information according to a viewing angle of an observer. This is as described above.

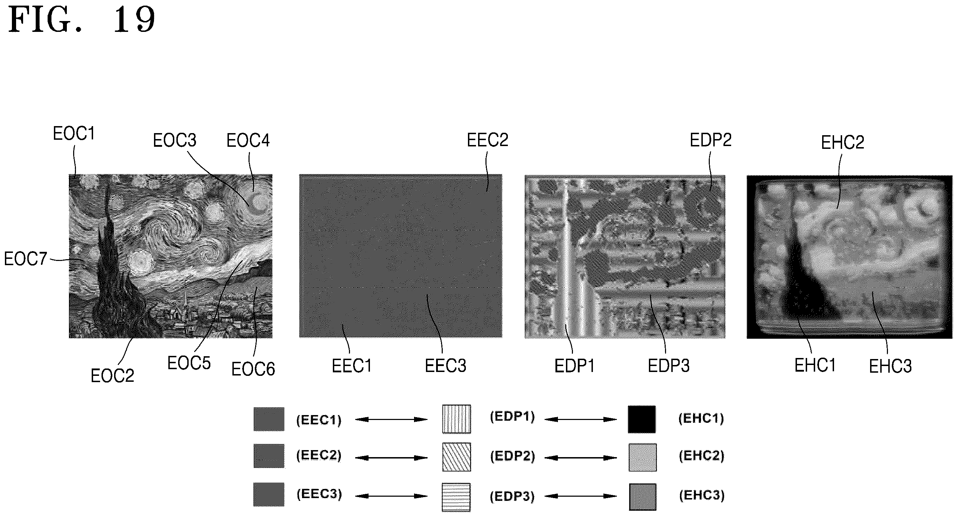

FIG. 19 is a diagram illustrating an embodiment of designating a hologram color (HC) according to the present disclosure.

Hereinafter, an embodiment of designating a hologram color (HC) through the hologram color (HC) designation method described above will be described with reference to FIG. 19. However, the embodiment is only one embodiment for implementing the present disclosure, not all the technical ideas of the present disclosure are represented by only the content of the embodiment.

### [Embodiment]

The present embodiment uses RGB as encrypted colors (EC).

In the present embodiment,
1) A red (R) encrypted color EEC1, a vertical-line dithering pattern EDP1, and a black hologram color EHC1 are encoded to correspond to each other. 2) A green (G) encrypted color EEC2, a diagonal-line dithering pattern EDP2, and a yellowish-green hologram color EHC2 are encoded to correspond to each other. 3) A blue (B) encrypted color EEC3, a horizontal-line dithering pattern EDP3, and a blue hologram color EHC3 are encoded to correspond to each other.
(1) In a first operation, an original image (OI) is obtained.
(2) An original color (OC) of each of pixels included in the obtained original image is recognized.
(3) After finding the position of a corresponding original color (OC) on a color coordinate system for each original color (OC) recognized in operation (2), a standard color (SC) closest to the found position on the color coordinate system is selected, and the selected original colors (OC) for which the same standard color (SC) is selected are classified as similar.
   For example, among the original colors (OC), EOC1, EOC2, and EOC3 are classified as similar, EOC4 and EOC5 are classified as similar, and EOC6 and EOC7 are classified as similar.
(4) Pixels including the original colors (OC) classified as similar are converted to be assigned the same encrypted color (EC).
   For example, EOC1, EOC2, and EOC3 are converted into EEC1, EOC4 and EOC5 are converted into EEC2, and EOC6 and EOC7 are converted into EEC3.
(5) After the encrypted colors (EC) are assigned through operation (4), a dithering pattern (DP) corresponding to each pixel is selected, and pattern data (PD) including a combination of such patterns is generated.
   For example, the pixels assigned the encrypted color EEC1 are converted into the dithering pattern EDP1, the pixels assigned the encrypted color EEC2 are converted into the dithering pattern EDP2, and the colors assigned the encrypted color EEC3 are converted into the dithering pattern EDP3.
(6) A mask pattern is formed on a dithering mask, based on the pattern data (PD) generated in operation (5).
(7) A predicted hologram color (HC) designation result is output based on information about a hologram color (HC) expressed by the dithering pattern (DP).

For example, the hologram color EHC1 may be designated for a region corresponding to the dithering pattern EDP1, the hologram color EHC2 may be designated for a region corresponding to the dithering pattern EDP2, and the hologram color EHC3 may be designated for a region corresponding to the dithering pattern EDP3.

According to the present embodiment, a result of designating the hologram colors EHC may be derived such that the color combination is similar to the original image. Also, the original image may be selected without any limitations.

In addition, unless the same conversion algorithm is used in the encryption operation (S20) and the pattern data generation operation (S30), the same hologram cannot be produced. In addition, because the hologram color EHC changes as an emission angle of a light source or a viewing angle of an observer changes, the same hologram structure cannot be manufactured. Therefore, the hologram color (HC) designation method according to the present disclosure may greatly improve security.

The present disclosure has been described in detail with reference to the preferred embodiments and the drawings, but the scope of the technical idea of the present disclosure is not limited to these drawings and embodiments. Accordingly, various modifications or equivalents thereof may fall within the scope of the technical idea of the present disclosure. Therefore, the scope of the technical idea according to the present disclosure should be interpreted by the claims, and the technical idea within the equivalents should be interpreted as falling within the scope of the present disclosure.

### INDUSTRIAL APPLICABILITY

According to an embodiment of the present disclosure, provided is a hologram color designation system based on a dithering mask. In addition, embodiments of the present disclosure may be applied to a system for designating a color for a hologram used in industry.

## Claims

1. A hologram color designation system based on a dithering mask, the hologram color designation system comprising:
an image obtaining unit configured to obtain an original image;
an encryption unit configured to convert original colors of respective pixels included in the original image into encrypted colors, according to a predefined standard;
a pattern data generation unit configured to generate, based on the encrypted colors, pattern data including dithering patterns corresponding to the respective pixels; and
a pattern forming unit configured to form, based on the pattern data, a mask pattern on a dithering mask.

2. The hologram color designation system of claim 1, wherein the encryption unit is further configured to classify the original colors of the respective pixels included in the original image according to similarity between the original colors, and convert the original colors classified as similar, into a same encrypted color.

3. The hologram color designation system of claim 2, wherein the encryption unit is further configured to select a position of an original color on a color coordinate system corresponding to each of the original colors, and select, from among positions of standard colors on the color coordinate system corresponding to a plurality of preset standard colors, the position of the standard color closest to the position of the original color, so as to classify the original colors for which the position of a same standard color is selected, as similar.

4. The hologram color designation system of claim 1, wherein the pattern data generation unit is further configured to convert the encrypted colors into dithering patterns corresponding to the encrypted colors in a one-to-one manner.

5. The hologram color designation system of claim 1, further comprising a result output unit configured to output a predicted hologram color designation result, based on information about the hologram colors expressed by the dithering pattern.

6. The hologram color designation system of claim 5, wherein the result output unit comprises information about changes in the hologram colors according to an emission angle of a light source, for outputting the predicted hologram color designation result.

7. The hologram color designation system of claim 5, wherein the result output unit comprises information about changes in the hologram colors according to a viewing angle of an observer, for outputting the predicted hologram color designation result.

8. A hologram color designation method based on a dithering mask, the hologram color designation method comprising:
an image obtaining operation of obtaining an original image;
an encryption operation of converting original colors of respective pixels included in the original image into encrypted colors, according to a predefined standard;
a pattern data generation operation of generating, based on the encrypted colors, pattern data including dithering patterns corresponding to the respective pixels; and
a pattern forming operation of forming, based on the pattern data, a mask pattern on a dithering mask.

9. The hologram color designation method of claim 8, wherein the encryption operation comprises classifying the original colors of the respective pixels included in the original image according to similarity between the original colors, and converting the original colors classified as similar, into a same encrypted color.

10. The hologram color designation method of claim 9, wherein the encryption operation comprises selecting a position of an original color on a color coordinate system corresponding to each of the original colors, and selecting, from among positions of standard colors on the color coordinate system corresponding to a plurality of preset standard colors, the position of the standard color closest to the position of the original color, so as to classify the original colors for which the position of a same standard color is selected, as similar.

11. The hologram color designation method of claim 8, wherein the pattern data generation operation comprises converting the encrypted colors into dithering patterns corresponding to the encrypted colors in a one-to-one manner.

12. The hologram color designation method of claim 8, further comprising a result output operation of outputting a predicted hologram color designation result, based on information about the hologram colors expressed by the dithering pattern.

13. The hologram color designation method of claim 12, wherein the result output operation comprises outputting the predicted hologram color designation result, based on information about changes in the hologram colors according to an emission angle of a light source.

14. The hologram color designation method of claim 12, wherein the result output operation comprises outputting the predicted hologram color designation result, based on information about changes in the hologram colors according to a viewing angle of an observer.
